(19) Europäisches Patentamt
European Patent Office
Office européen des brevets

(11) Veröffentlichungsnummer: **0 134 921**
**B1**

# (12) EUROPÄISCHE PATENTSCHRIFT

(45) Veröffentlichungstag der Patentschrift: **20.05.87**

(21) Anmeldenummer: **84106958.6**

(22) Anmeldetag: **18.06.84**

(51) Int. Cl.[4]: **C 08 F 226/00**, C 08 F 226/06, C 22 B 3/00 // (C08F226/00, 226:06, 230:08, 230:06),(C08F226/06, 226:00, 230:08, 230:06)

## (54) Copolymerisat, Verfahren zu seiner Herstellung und seine Verwendung als Sorptionsmittel.

(30) Priorität: **09.07.83 DE 3324835**

(43) Veröffentlichungstag der Anmeldung: **27.03.85 Patentblatt 85/13**

(45) Bekanntmachung des Hinweises auf die Patenterteilung: **20.05.87 Patentblatt 87/21**

(84) Benannte Vertragsstaaten: **AT BE CH DE FR GB IT LI NL SE**

(56) Entgegenhaltungen:
**DE-A-3 043 766**
**US-A-3 817 745**

(73) Patentinhaber: **CASSELLA Aktiengesellschaft, Hanauer Landstrasse 526, D-6000 Frankfurt am Main 61 (DE)**

(72) Erfinder: **Keil, Karl- Heinz, Dr., Lübecker Weg 3, D-6450 Hanau- Mittelbuchen (DE)**
Erfinder: **Engelhardt, Fritz, Dr., Hünfelder Strasse 20, D-6000 Frankfurt am Main 61 (DE)**
Erfinder: **Greiner, Ulrich, Dr., Nidderauer Strasse 13, D-6369 Schöneck 1 (DE)**
Erfinder: **Kühlein, Klaus, Dr., Fasanenstrasse 41, D-6233 Kelkheim/Ts (DE)**
Erfinder: **Keller, Reinhold, Dr., Wiesenweg 5, D-6232 Bad Soden/Ts (DE)**
Erfinder: **Schlingmann, Merten, Dr., Schneidhainer Strasse 32a, D-6240 Königstein (DE)**
Erfinder: **Hess, Gerhard, Düdelsheimer Strasse 7, D-6472 Altenstadt/2 (DE)**

(74) Vertreter: **Urbach, Hans- Georg, Dr., Hanauer Landstrasse 526, D-6000 Frankfurt am Main 61 (DE)**

**EP 0 134 921 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft ein vernetztes, poröses perlförmiges Copolymerisat, ein Verfahren zu seiner Herstellung und seine Verwendung als Sorptionsmittel, insbesondere zur Abtrennung saurer Substanzen aus Lösungsmitteln.

Die Abtrennung von Carbon- und Mineralsäuren aus Lösungsmitteln wird in der Technik zunehmend wichtiger. Diese Abtrennung kann mit Austauscherharzen vorgenommen werden. So ist in der JA-PS 24561/1971 ein Verfahren zum Abtrennen von Carbonsäuren mit basischen Anionenaustauschern vom Styroltyp beschrieben. Bei diesem Verfahren ist die Menge der sorbierten Carbonsäure nur gering, und außerdem muß die Desorption mit Aceton und Kohlendioxidgas unter einem Druck von 0,5 bis 20 bar durchgeführt werden, was insbesondere in großtechnischem Maßstab einen erheblichen Aufwand erfordert.

Aus der DE-C2- 30 43 766 ist ein Verfahren zur Gewinnung von Carbonsäuren aus einer wäßrigen Lösung bekannt, bei dem als Sorptionsmittel eine vernetzte polymere Verbindung eingesetzt wird, die eine Pyridin-Skelettstruktur aufweist. Als Vernetzer sind Divinylbenzol, Divinylphthalat und Ethylenglykol-diacrylat genannt. Zur Desorption wird ein aliphatischer Alkohol, ein Keton oder ein Carbonester verwendet. Die Kapazität des verwendeten Sorptionsmittels ist jedoch noch zu gering und außerdem quillt das Sorptionsmittel zu stark, so daß sich der Strömungswiderstand bzw. die Durchflußzeit erhöht.

Es wurde nun überraschenderweise gefunden, daß das erfindungsgemäße Copolymerisat ein hohes Sorptionsvermögen für saure Substanzen und ein geringes Quellvermögen besitzt. Das erfindungsgemäße vernetzte poröse perlförmige Copolymerisat enthält 50 bis 99,9 Gew.% wie derkehrender Einheiten einer eine einzige Polymerisierbare olefinische Gruppe enthaltenden heterocyclischen 5-Ringverbindung, die im Ring mindestens ein protonierbares Stickstoffatom besitzt, oder mehrerer derartiger Verbindungen, 0,1 bis 50 Gew.% Einheiten eines Vernetzers oder mehrerer derartiger Vernetzer, 0 bis 25 Gew.% Einheiten einer polymerisierbaren bor- und/oder silizium-organischen Verbindung oder mehrerer derartiger Verbindungen und, bezogen auf 100 Gew.% der Summe der vorgenannten Einheiten, 5 bis 350 Gew.% Sinheiten eines N-Vinyl-amids der allgemeinen Formel I $CH_2=CH-N(R^1)-C(R^2-)=O$, worin $R^1$ Wasserstoff, Methyl oder Ethyl und $R^2$ Wasserstoff oder $(C_1-C_3)$Alkyl bedeuten, oder mehrerer derartiger N-Vinyl-amide und 0 bis 40 Gew.% Einheiten einer anderen polymerisierbaren Verbindung oder mehrerer derartiger Verbindungen.

$R^2$ kann neben Wasserstoff Methyl, Ethyl, Propyl oder Isopropyl bedeuten. Vorzugsweise bedeuten $R^1$ und $R^2$ unabhängig voneinander Wasserstoff oder Methyl.

In vielen Fällen enthält das Copolymerisat, bezogen auf 100 Gew.% Einheiten der polymerisierbaren heterocyclischen 5-Ringverbindungen, Einheiten der Vernetzer und evtl. vorhandene Einheiten polymerisierbarer bor- und/oder silizium-organischer Verbindungen anstelle von 0 bis 40 Gew.% Einheiten anderer polymerisierbarer Verbindungen, zweckmäßigerweise nur 0 bis 25 Gew.% Einheiten von anderen polymerisierbaren Verbindungen. Bezogen auf die bereits genannten 100 Gew.% Einheiten der polymerisierbaren heterocyclischen 5-Ringverbindungen, der Vernetzer und der evtl. vorhandenen bor- und/oder silizium-organischen Verbindungen, können in dem Copolymerisat z.B. 10 bis 40 Gew.-%, vorzugsweise 10 bis 110 Gew.%, ganz besonders bevorzugt 10 bis 250 Gew.% Einheiten eines oder mehrerer N-Vinyl-amide der allgemeinen Formel I vorhanden sein.

Eine bevorzugte Ausführungsform des erfindungsgemäßen Copolymerisats enthält 50 bis 95 Gew.% wiederkehrender Einheiten einer eine polymeresierbare olefinische Gruppe enthaltenden heterocyclischen 5-Ringverbindung, die im Ring mindestens ein protonierbares Stickstoffatom besitzt, oder mehrerer derartiger Verbindungen, 5 bis 50 Gew.% Einheiten eines Vernetzers oder mehrerer derartiger Vernetzer, 0 bis 25 Gew.% Einheiten einer polymerisierbaren bor- oder silizium-organischen Verbindung oder mehrerer derartiger Verbindungen und, bezogen auf 100 Gew.% der Summe der vorgenannten Einheiten, 10 bis 250 Gew.% Einheiten eines N-Vinyl-amids der allgemeinen Formel I oder mehrerer derartiger N-Vinyl-amide, und 0 bis 25 Gew.% Einheiten einer anderen polymerisierbaren Verbindung oder mehrerer derartiger Verbindungen.

Besonders bevorzugt sind auch solche erfindungsgemäßen Copolymerisate, die mindestens 0,1 Gew.%, vorzugsweise 0,1 bis 10 Gew.% Einheiten polymerisierbarer silizium- und/ oder bor-organischer Verbindungen enthalten, insbesondere dann, wenn diese Verbindungen gleichzeitig als Einheiten n-valenter Vernetzer wirken.

Bevorzugt sind auch solche erfindungsgemäßen Copolymerisate, die keine Einheiten anderer polymerisierbarer Verbindungen enthalten.

Das erfindungsgemäße Copolymerisat enthält Einheiten einer eine polymerisierbare olefinische Gruppe enthaltenden heterocyclischen 5-Ringverbindung, die im Ring mindestens ein protonierbares Stickstoffatom besitzt, oder mehrerer derartiger Verbindungen, ferner Einheiten eines oder mehrerer Vernetzer sowie Einheiten eines oder mehrerer N-Vinylamide. Das erfindungsgemäße Copolymerisat kann gegebenenfalls weiterhin Einheiten einer oder mehrerer polymerisierbarer silizium- und/oder bor-organischer Verbindungen und Einheiten einer oder mehrerer anderer polymerisierbarer Verbindungen enthalten. Unter Einheiten werden dabei die im Copolymerisat statistisch verteilten Gruppen verstanden, die aus den zur Herstellung des Copolymerisats eingesetzten polymerisierbaren monomeren Verbindungen entstanden sind.

Die polymerisierbare olefinische Gruppe der heterocyclischen 5-Ringverbindung, die im Kern mindestens ein protonierbares Stickstoffatom besitzt, ist in der Regel direkt, gegebenenfalls aber auch indirekt, z.B. über ein Sauerstoff- oder Schwefelatom, an den Kern gebunden und besitzt normalerweise die allgemeine Formel II

$-(CH_2)_m-C(R^3)=C(R^4)H$ II

worin $R^3$, $R^4$ unabhängig voneinander Wasserstoff oder $(C_1-C_4)$Alkyl und m eine Zahl von 0 bis 4 bedeuten.

Für die Reste $R^3$, $R^4$ ist die Kombination $H/CH_3$ bzw. $CH_3/H$ oder H/H bevorzugt. Für m ist 1, insbesondere aber 0 bevorzugt.

Die in dem erfindungsgemäßen Copolymerisat enthaltenen wiederkehrenden Einheiten einer heterocyclischen 5-Ring-verbindung, die im Ring mindestens ein protonierbares Stickstoffatom besitzt, haben daher in der Regel die allgemeine Formel III

$$R{-}X{-}(CH_2)_m - \underset{R^3}{\underset{|}{\overset{|}{C}}} - \underset{R^4}{\underset{|}{\overset{|}{C}}} - H \qquad (III)$$

worin R den Rest einer heterocyclischen 5-Ringverbindung, die im Ring mindestens ein protonierbares Stickstoffatom besitzt, $R^3$, $R^4$ Wasserstoff oder $(C_1$-$C_4)$Alkyl, X= -O- oder -S- oder-vorzugsweise eine direkte Bindung und m eine Zahl von 0 bis 4, vorzugsweise 1, insbesondere aber 0, bedeuten. Der Rest R der heterocyclischen 5-Ringver-bindung kann z.B. ein, zwei, drei oder vier Stickstoffatome besitzen, von denen mindestens eines protonierbar sein muß, wobei der heterocyclische Ring gegebenenfalls auch noch ein anderes Heteroatom oder mehrere andere Heteroatome, insbesondere Sauerstoff und/oder Schwefel, enthalten kann. Protonierbare Stickstoffatome sind basische Stickstoffatome mit einem freien Elektronenpaar, die z.B. in dem 5-Ring als -N=, -NH- oder -N- eingebaut sind.

Stickstoffatome, die z.B. einer Ketogruppe benachbart sind, besitzen keine basischen Eigenschaften mehr und können daher nicht mehr protoniert werden. Der heterocyclische 5-Ring kann gesättigt, teilweise gesättigt oder ungesättigt sein und beispielsweise ein Imidazol, Imidazolin, Oxazol, Oxazolin, Oxazolidin, Thiazol, Oxadiazol, Pyrrol, Triazol oder Tetrazol darstellen und kann gegebenenfalls noch eine oder mehrere $(C_1$-$C_4)$ Alkyl-und/oder $(C_2$-$C_4)$ Hydroxyalkylgruppen besitzen. Polymerisierbare olefinische Gruppen sind insbesondere die Vinyl-, Allyl-, Methallyl- oder Isopropenylgruppe. Als eine polymerisierbare olefinische Gruppe enthaltende heterocyclische 5-Ringverbindung, die im Ring mindestens ein protonierbares Stickstoffatom besitzt, sind z.B. zu nennen: 1-Vinyl-1, 2,3-triazol, 1-Vinyl-1,2,4-triazol, 4-Vinyl-1,2,3-triazol, 5-Vinyl-1,2,3-triazol, 1-Vinyl-1,2,3,4-tetrazol, 2-Vinyl-1,2,3,4-tetrazol, 2-Allyl-1,2,3,4-tetrazol, 1-Al-lyl-1,2,3,4-tetrazol, 1-Methyl-5-vinyl-1,2,3,4-tetrazol, 2-Methyl-5-vinyl-1,2,3,4-tetrazol, 3-Vinyl-1,2,4-oxadiazol, 3-Vinyl-5-methyl-1,2,4-oxadiazol, 3-Isopropenyl-1,2,4-oxadiazol, 2-Isopropenyl-1,3,4-oxadiazolin-5-on, 3-Isopropenyl-1,2,4-oxadiazol, 3-Isopropenyl-5-methyl-1,2,4-oxadiazol, 2-Vinyl-oxazolin, 2-Isopropenyl-oxazolin, 2-Vinyl-3-methyl-oxazolidin, 2-Vinyl-thiazol, 4-Vinyl-thiazol, 1-Vinyl-2-imidazolin, 2-Vinyl-4-(oder 5-)-methyl-2-imidazolin, 1-Vinyl-2-methyl-2-imidazolin, 1-Vi-nyl-imidazol, 1-Methyl-2-vinyl-imidazol, 1-Vinyl-2-me-thyl-imidazol, 1-Vinyl-4-(2-hydroxyethyl)-imidazol, N-Vinyl-pyrrol, 2-Isopropenyl-2-imidazolin, 2-Vinyl-3-me-thyl-2-imidazolin, 1-Vinyl-2,4-dimethyl-imidazol.

Der Vernetzer verknüpft n Polymerenketten miteinander, wobei n eine Zahl gleich oder größer als 2 ist. Insbesondere ist n = 2, 3 oder 4, vorzugsweise 2.

Geeignete Vernetzer sind beispielsweise Verbindungen, die n polymerisierbare Reste, insbesondere der Formeln

$CH_2{=}CH$-, $CH_2{=}CH$-$CH_2$- oder $CH_2{=}CH(R^5)$-CO- bzw.

$CH_2{=}CH((R^5)$-CO-O- im Molekül enthalten, wobei n die bereits genannte Bedeutung, normalerweise 2, 3 oder 4, vorzugsweise 2, besitzt und $R^5$ Wasserstoff oder $(C_1$-$C_4)$-Alkyl, insbesondere Wasserstoff oder Methyl, bedeuten. Beispiele für derartige Vernetzer sind: Triallyl-cyanurat, Triallylphosphat, N,N',N"-Tris-acryloyl-perhydrotriazin, 1,2,3-Trivinyloxypropan, Tetraallyloxy-ethan, Pentaallyl-saccharose, Triallyl-amin, N,N',N"-Tris-(2-acry-loyloxyethyl-bzw.-methacryloyloxy-ethyl)-isocyanurat, Ethenphosphonsäure-di-allylester, Ethylenglykol-1,2-bis-(ethenphosphonsäureester), ferner allgemein Verbindungen der Formeln IV, V oder VI

$(CH_2{=}CH)_n$-$R^6$ (IV)

$(CH_2{=}CH$-$CH_2)_n$-$R^7$ (V)

$(CH_2{=}CH(R^5)$-$CO)_n$-$R^8$ (VI)

worin $R^5$ die bereits genannte Bedeutung, n normalerweise 2, 3 oder 4, vorzugsweise 2, bedeutet und $R^7$ der durch Entfernung von n aciden H-Atomen entstandene Rest einer Di-, Tri-, Tetra- oder Polycarbonsäure und $R^8$ der durch Entfernung von n Hydroxyl-Wasserstoffatomen entstandene Rest eines Di-, Tri-, Tetra- oder Polyols und $R^6$ der durch Entfernung von n Wasserstoffatomen entstandene Rest eines aliphatischen, aromatischen oder heteroaromatischen Kohlenwasserstoffs darstellen.

Geeignete Vernetzer der Formel IV sind Divinyl-benzole, insbesondere 1,4-Divinylbenzol, Trivinylbenzole, Divinylpyridine, Divinylchinoline.

Beispiele für geeignete Vernetzer der Formel V sind Triallyl-tricarballylat, Triallyl-aconitat, Triallyl-citrat, Triallyl-trimesinat, Triallyl-trimellitat, Diallyl-oxalat, Divinylphthalat, Diallylmaleat, -fumarat, -adipat, -phthalat.

Beispiele für geeignete Vernetzer der Formel VI sind Trimethylolpropan-tri-acrylat und -methacrylat, Pentaerythrit-tetra-acrylat und -methacrylat, Pentaerythrit-triacrylat und -methacrylat, Dimethylenglykoldiacrylat- oder -dimethacrylat, Butylenglykoldiacrylat oder -dimethacrylat.

Von den Verbindungen der allgemeinen Formel VI sind besonders geeignet die Diacrylate und insbesondere die Dimethylacrylate des Ethylenglykols, des Diethylenglykols und der Polyethylenglykole 200 bis 600, insbesondere die Dimethacrylate der Polyethylenglykole 200 bis 600.

Geeignete Vernetzer sind ferner z.B. Diallylamin, Divinylketon, Divinylsulfon, Diallylmelamin.

2-valente Vernetzer sowie wasserlösliche Vernetzer sind bevorzugt. Geeignete wasserlösliche Vernetzer sind

insbesondere Derivate der Acryl- bzw. Methacryl-säure, wie z.B. N,N'-Methylen-bis-acrylamid, N,N'-Methylen-bis-methacrylamid, N,N'-Methylen-bis-(N-hydroxymethyl-methacrylamid), N,N'-Bis-(methacryloyl)-aminoessigsäure, N,N'-Bis(acryloyl)-aminoessigsäure, 1,2-Bis-(acrylamido)-1,2-di-hydroxy-ethan, 1,2-Bis-(methacrylamido)-1,2-dihydroxy-ethan, 1,2-Bis-(N-hydroxymethyl-methacrylamido)-1,2-di-hydroxy-ethan, 1,2-Bis-(N-methoxymethyl-methacrylamido)-1,2-dimethyloxy-ethan, 1,6-Bis-(acrylamido)-hexan, 1,6-Bis-(methacrylamido)-hexan, 2-Methyl-1,4-bis-(acrylamido)-butan ("Isovalerilyden-bis-acrylamid"), 2-Methyl-1,4-bis-(methacrylamido)-butan ("Isovalerilyden-bis-methacrylamid"), die Diacrylate und Dimethacrylate des Ethylenglykols, Diethylenglykols und der polyglykole 200 bis 600.

Günstig sind auch Kombinationen von zwei oder mehreren Venetzern, z.B. von N,N'-Methylen-bis-acrylamid/N,N-Bis-(acryloyl)-aminoessigsäure; N,N'-Methylen-bis-acrylamid/ Isovalerilyden-bis-acrylamid; N,N'-Methylen-bis-acrylamid/ Ethylenglykol-1,2-bis-(ethenphosphonsäureester). Bevorzugte Vernetzerkombinationen können als eine Vernetzerkomponente nicht nur N,N'-Methylen-bis-acrylamid und/oder N,N'-Methylen-bis-methacrylamid, sondern auch die Diacrylate und/oder Dimethacrylate des Ethylenglykols, Diethylenglykols oder der Polyethylenglykole 200 bis 600 oder N,N',N''-Tris-(2-acryloyloxyethyl)-isocyanurat oder N,N',N''-Tris-(2-methacryloyloxyethyl)-isocyanu-rat enthalten. Besonders bevorzugte Vernetzerkombinationen enthalten oder bestehen aus N,N'-Methylen-bis-acrylamid/Dimethacrylat des Polyethylenglykols 200 bis 600 und/oder des entsprechenden Methacrylamids und/oder des entsprechenden Diacrylats.

Geeignete n-valente Vernetzer sind jedoch auch solche Verbindungen, die nur eine oder zwei polymerisierbare olefinische Doppelbindungen im Molekül enthalten, die aber aufgrund von Sekundärreaktionen zusätzlich (n-1) bzw. (n-2) Polymerenketten miteinander verknüpfen können. Derartige Vernetzer sind z.B. Alkoxy-Gruppen enthaltende Silane, bei denen die Alkoxy-Gruppen in wäßrigem Medium intermediär zu Si-OH-Gruppen hydrolysiert werden. Zwei derartige Silanolgruppen bewirken dann unter Kondensation und Ausbildung einer Siloxanbindung Si-O-Si die Verknüpfung zweier Ketten. Beispiele fuür geeignete derartige Vernetzer sind die später angegebenen silizium-organischen Verbindungen, soweit sie 1 oder 2 olefinische Doppelbindungen und (n-1) bzw. (n-2) Alkoxygruppen enthalten.

Geeignete N-Vinyl-amide der allgemeinen Formel I sind z.B. N-Vinyl-formamid, N-Vinyl-acetamid, N-Vinyl-N-methyl-acetamid, N-Vinyl-N-methyl-formamid, N-Vinyl-Nethyl-acetamid, N-Vinyl-propionamid, N-Vinyl-N-methylpropionamid, N-Vinyl-N-ethyl-propionamid, N-Vinyl-butyramid, N-Vinyl-N-methyl-butyramid, N-Vinyl-N-ethyl-butyramid. Besonders geeignet sind N-Vinyl-formamid und insbesondere N-Vinyl-N-methyl-acetamid. Die N-Vinyl-amide der allgemeinen Formel I bauen in das erfindungsgemäße Copolymerisat Einheiten der allgemeinen Formel VII ein

wobei $R^1$ und $R^2$ die bereits genannten Bedeutungen besitzen.

Von den polymerisierbaren silizium- oder bor-organischen Verbindungen sind die polymerisierbaren silizium-organischen Verbindungen bevorzugt. Geeignete polymerisierbare silizium-organische Verbindungen sind z.B. polymerisier-. bare olefinische Gruppen enthaltende Silane, Siloxane und Silazane.

Geeignete polymerisierbare silizium- und bor-organische Verbindungen sind beispielsweise Acryl- bzw. Methacryl-säure-3-(trimethoxy-silyl)-propyl-ester, Acryl- bzw. Methacrylsäure-3-(triethoxy-silyl)-propyl-ester, Acryl bzw. Methacrylsäure-3-(tri(methoxyethoxy)-silyl)-propyl-ester, Acryl- bzw. Methacrylsäure-3-(tri(methoxyethoxyethoxy)-silyl)-propyl-ester, Acryl- bzw. Methacrylsäure-3-(di-(methoxy)-methyl-silyl)-propyl-ester, Acryl- bzw. Methacrylsaure-3-(di-(ethoxy)-ethyl-silyl)-propyl-ester, Vinyl-tri-ethoxy-silan, Vinyl-trimethoxy-silan, Vinyltri-allyloxy-silan, Allyl-tri-allyloxy-silan, Vinyl-methyl-di-ethoxy-silan, Vinyl-methyl-dimethoxy-silan, Vinyl-tri-acetoxy-silan, Vinyl-tri-(methoxyethoxy)-silan, 1,3-Di-vinyl-1,1,3,3-tetra-methyl-disiloxan, 1,3-Di-vinyl -1,1,3,3-tetra-methyl-disilazan, $CH_2=CH-COO-(CH_2)_3-(Si-(CH_3)_p-O)_3-Si(CH_3)_2-(CH_3)_2-O-CO-CH=CH_2$ , $CH_2=C(CH_3)-COO-(CH_2)_3-(Si(CH_3)_2-O)_p-Si(CH_3)_2-(CH_3)_2-O-CO-C(CH_3)=CH_2$, wobei p eine Zahl von 1 bis 20, insbesondere eine Zahl von 1 bis 10, bedeutet, $CH_2=CH-CH_2-NH-SiH(CH_3)-N(CH_2CH=-CH_2)-SiH(CH_3)-NH-CH_2-CH=CH_2$, Triallyl-borsäureester, Trimethallyl-borsäureester. Die polymerisierbaren silizium- oder bor-organischen Verbindungen können auch, falls die Voraussetzungen hierfür vorliegen, gleichzeitig als polymerisierbare silizium- oder bor-organische Verbindungen und als Vernetzer eingesetzt werden.

Geeignete andere polymerisierbare Verbindungen sind solche, die keiner der vorgenannten Gruppen angehören und nur eine polymerisierbare olefinische Gruppe im Molekül besitzen und die in geringer Menge in das Copolymerisat eingebaut werden können, ohne seine Eigenschaften wesentlich zu verandern, so z.B. Acrylsaure-β-hydroxyethylester, Methacrylsäure-β-hydroxyethylester, Styrol, Acrylnitril, Metharcylnitril.

Die erfindungsgemäßen porösen, perlförmigen Copolymerisate werden durch umgekehrte Suspensionspolymerisation dadurch hergestellt, daß 50 bis 99,9 Gew.% einer oder oder mehrerer heterocyclischer 5-Ringverbindungen, die eine polymerisierbare olefinische Gruppe enthalten und im Ring mindestens ein Protonierbares Stickstoffatom besitzen, 0,1 bis 50 Gew.% eines oder mehrerer Vernetzer, 0 bis 25 Gew.% einer oder mehrerer polymerisierbarer borund/oder silizium-organischer Verbindungen und, bezogen auf 100 Gew.% der Summe der vorgenannten Verbindungen, 5 bis 350 Gew.% eines oder mehrerer N-Vinyl-amide der Formel I und 0 bis 40 Gew.% einer oder mehrerer anderer polymerisierbarer Verbindungen copolymerisiert werden.

Vorzugsweise werden 50 bis 95 Gew.% einer eine polymerisierbare olefinische Gruppe enthaltenden heterocyclischen 5-Ring-Verbindung, die im Ring mindestens ein protonierbares Stickstoffatom besitzt, oder mehrerer derartiger Verbindungen, 5 bis 50 Gew.% eines Vernetzers oder mehrerer derartiger Vernetzer, 0 bis 25 Gew.% einer oder mehrerer polymerisierbarer bor- und/oder silizium-organischer Verbindungen und,

bezogen auf 100 % der Summe der vorgenannten Verbindungen, 10 bis 250 Gew.% eines oder mehrerer N-Vinyl-amide der allgemeinen Formel I und 0 bis 25 Gew.% Einheiten einer anderen polymerisierbaren Verbindung oder mehrerer derartiger Verbindungen copolymerisiert.

Ganz besonders bevorzugt werden bei der Copolymerisation keine Verbindungen aus der Gruppe der anderen polymerisierbaren Verbindungen und/oder 0,1 bis 10 Gew.% einer oder mehrerer polymerisierbarer bor- und/oder siliziumorganischer Verbindungen eingesetzt.

Die polymerisierbaren Monomeren können dabei in der Regel in handelsüblicher Form, also ohne vorherige Reinigung, eingesetzt werden.

Bei dem Verfahren der umgekehrten Suspensionspolymerisation wird eine in der Regel 15 bis 80 gew.%ige wäßrige Lösung der Monomeren in einer inerten hydrophoben Flüssigkeit suspendiert und darin in Gegenwart eines lipophilen Schutzkolloids normalerweise bei Temperaturen von 40 bis 95°C, vorzugsweise von 60 bis 80°C, zu porösen copolymeren Produkten in Perlform copolynerisiert. Das Verfahren der umgekehrten Suspensionspolymerisation ist z.B. beschrieben in DE-PS 10 81 228. Die zu copolymerisierenden Substanzen werden dabei zweckmäßigerweise nacheinander in Wasser aufgelöst. Feste Substanzen können aber gegebenenfalls auch zunächst in flüssigen Substanzen gelöst werden und die so erhaltene Lösung dann in Wasser gelöst werden. Zur Auflösung der Substanzen in Wasser kann der Zusatz einer geringen Menge einer Lauge, wie z.B. Kali- oder Natronlauge, erforderlich werden. Wasserunlösliche Vernetzer, wie z.B. Divinylbenzol, sowie gegebenenfalls andere polymerisierbare Verbindungen, wie z.B. Acrylsäure -2-hydroxyethylester, Methacrylsäure-2-hydroxyethyl-ester, Acrylsäure-2-hydroxypropylester, Methacrylsäure-2-hydroxypropylester, werden vor der Zugabe der wäßrigen Lösung in der hydrophoben Flüssigkeit gelöst.

Die Copolymerisation wird in an sich bekannter Weise, z.B. durch UV-Licht, energiereiche Strahlung, in der Regel aber durch einen im Monomerengemisch loslichen, Radikale liefernden Initiator ausgelöst. Geeignete Initiatoren sind z.B. Benzoylperoxid, tert-Butylhydro-peroxid, Cumolperoxid, Methylethylketon-peroxid, Lauroylperoxid, tert-Butylperbenzoat, tert-Butyldiperphthalat, Azodiisobutyronitril, 2,2'-Azo-bis-(2,4-dimethylvaleronitril), 2-Phenyl-azo-2,4-dimethyl-4-methoxy-valeronitril, 2-Cyano-2-propyl-azoformamid, Azodiisobutyramid, Dimethyl-, Diethyl- oder Dibutyl-azobis-methylvalerat. Bezogenauf die Monomerenmenge (einschließlich Vernetzer) werden etwa 0,01 bis 2 Gew.%, vorzugsweise 0,1 bis 1 Gew.%, Initiator angewandt.

Der Radikalinitiator oder das Gemisch verschiedener Radikalinitiatoren kann der Wasser- und/oder Ölphase zugesetzt werden.

Als hydrophobe, die Ölphase bildende Flüssigkeiten können alle Wasser nicht lösenden inerten Füssigkeiten verwendet werden, die von dem Copolymerisat leicht abgetrennt werden können. Derartige Flüssigkeiten sind z.B. organische Lösungsmittel, insbesondere Kohlenwasserstoffe, wie z.B. Cyclohexan, n-Pentan, n-Hexan, n-Heptan, i-Octan, technische Kohlenwasserstoffgemische, Toluol, Xylol, halogenierte Kohlenwasserstoffe, wie z.B. Chlorbenzol, o-Di-chlorbenzol. Auch Mischungen verschiedener organischer Lösungsmittel sind geeignet.

Das lipophile Schutzkolloid muß in der benutzten hydrophoben Flüssigkeit löslich sein und verhindert ein Zusammenfließen der fein zerteilten dispersen wäßrigen Phase. Geeignete lipophile Schutzkolloide sind z.B. hochmolekulare organische Substanzen, wie z.B. Cellulosederivate, polymere Maleinsäurederivate mit Alkylvinylethern; Polymaleinsäureester, Alkylacrylate und Dialkylaminoacrylate/methacrylate, ferner Sorbitanester, ethoxylierte Fettsäureamide, Glyzerinfettester.

Weitere geeignete lipophile Schutzkolloide sind z.B. beschrieben in DE 26 34 486 B2. Es sind dies Reaktionsprodukte, die durch Umsetzung von Polybutadienölen, die allylständige Wasserstoffe enthalten, oder von Ölen und/ oder Harzen, die allylständige Wasserstoffatome enthalten und die durch Mischpolymerisation von Olefinen und Diolefinen mit 4 bis 6 C-Atomen hergestellt worden sind und ein Molgewicht von 750 bis 50.000 aufweisen, mit 2 bis 30 Gew.% Maleinsäureanhydrid, bezogen auf die Öle und Harze, erhalten worden sind. Geeignet sind z.B. auch die Handelsprodukte Lithene∫LX16-10MA und Lithene∫PM-25MA der Firma Rivertex Ltd., Templefields Harlow, Essex, Great Britain.

Das lipophile Schutzkolloid, oder ein Gemisch verschiedener lipophiler Schutzkolloide, kommt in der Regel in Mengen von 0,05 bis 3 Gew.%, vorzugsweise 0,1 bis 1 Gew.%, bezogen auf die Menge der hydrophoben Flüssigkeit zum Einsatz. Die Volumina der wäßrigen Lösung und der hydrophoben Flüssigkeit verhalten sich normalerweise wie 1: (2 bis 50). Die Dispergierung der wäßrigen Lösung in der mit lipophilem Schutzkolloid versetzten Ölphase erfolgt in an sich bekannter Weise, vorzugsweise durch kräftiges Rühren. Es ist zweckmäßig, die Copolymerisation unter Ausschluß von Sauerstoff durchzuführen. Dies kann in bekannter Weise durch Spülen bzw. Durchleiten eines Inertgases, wie z.B. Stickstoff, erfolgen. Die Copolymerisation ist in der Regel nach 0,3 bis 3 h beendet. Nach beendeter Copolymerisation wird das erhaltene perlförmige Copolymerisat abgetrennt, mit Wasser oder einem organischen Lösungsmittel gewaschen und getrocknet.

Das erfindungsgemäße vernetzte Copolymerisat liegt in Form poröser Perlen vor, deren Durchmesser durch die Wahl der Herstellungsbedingungen, insbesondere der Rührgeschwindigkeit und/oder des lipophilen Schutzkolloids im Bereich von ca. 2 bis 0,04 mm wählbar ist. Bei gegebenen Herstellungsbedingungen werden Perlen mit einem engen Durchmesserspektrum erhalten. Das erfindungsgemäße Copolymerisat liegt insbesondere in Form von Perlen mit einem Durchmesser von 0,04 bis 0,15 mm, vorzugsweise 0,04 bis 0,08 mm, vor und ist hervorragend als Sorptionsmittel, insbesondere als Sorptionsmittel für saure Substanzen aus-Lösungsmitteln geeignet. Unter sauren Substanzen werden im Rahmen der vorliegenden Erfindung solche Substanzen der allgemeinen Formel HA verstanden, die in einem Lösungsmittel der allgemeinen Formel Lm (in der Regel Wasser oder ein Wasser enthaltendes Lösungsmittelgemisch) in $LmH^+$ und einem Säurerest $A^-$ dissoziieren können. Derartige saure Substanzen sind z.B. Carbonsäuren, Sulfonsäuren, Mineralsäuren,

Thiocarbonsäuren, Phenole, Thiophenole, Merkaptane, Säureimide, Säuresulfimide. Die genannten sauren organischen Substanzen können auch substituiert sein und/oder mehrere gleiche oder verschiedene saure Gruppen im Molekül enthalten.

Geeignete aliphatische und aromatische Mono-, Di- und Polycarbonsäuren, Hydroxy- und Ketocarbonsäuren, sind z.B. Ameisensäure, Essigsäure, Propionsäure, n-Buttersäure, i-Buttersäure, n-Valeriansäure, Trimethylessigsäure, Capronsäure, n-Heptylsäure, Caprylsäure, Caprinsäure, Pelargonsäure, Stearinsäure, Talgfettsäure, Fluoressigsäure, Chloressigsäure, Bromessigsäure, Jodessigsäure, Dichloressigsäure, 2-Chlorpropionsäure, Glykolsäure, Milchsäure, Methoxyessigsäure, Thioglykolsäure, Cyanessigsäure, Glyoxylsäure, Malonsäure, Acrylsäure, Methacrylsäure, Vinylessigsäure, Phenylessigsäure, Oxalsäure, Bernsteinsäure, Glutarsäure, Adipinsäure, Maleinsäure, Fumarsäure, Phthalsäure, Isophthalsäure, Terephthalsäure, Zitronensäure, Äpfelsäure, Benzilsäure, Aconitsäure, Trimesinsäure, Benzoesäure, Zimtsäure, Mandelsäure, Weinsäure, Salicylsäure, Acetoessigsäure, Hydroxybenzoesäure, Gallussäure, Dihydroxybenzoesäure. Ferner sind z.B. geeignet 6-Aminopenicillansäure und 7-Aminoce-phalosporansäure.

Geeignete Mineralsäuren sind z.B. Schwefelsäure-, Phosphorsäure, Phosphorige-Säure, Salzsäure.

Besonders geeignet sind die erfindungsgemäßen Copolymerisate auch zur Sorption von Sulfonsäuren, wie z.B. Benzolsulfonsäure oder Naphthalin-1- oder -2-sulfonsäure oder Naphthalin- oder Benzol-di- oder polysulfonsäuren, insbesondere auch zur Sorption von substituierten Sulfonsäuren, z.B. der Benzol-, Naphthalin- und Anthrachinonreihe, wie sie zum Teil bei der Fabrikation von Farbstoffen, insbesondere Azofarbstoffen, verwendet werden. Derartige Sulfonsäuren können z.B. Mono-, Di- oder Trisulfonsäuren sein und z.B. durch Hydroxy, Amino, Carboxy, Halogen, Nitro, Alkyl mit 1 bis 4 C-Atomen ein- oder mehrfach substituiert sein. Derartige Sulfonsäuren sind in der Farbstoffindustrie zum Teil unter ihren Trivial- oder Entdeckernamen oder unter alphanumerischen Bezeichnungen (= "Buchstabensäuren") bekannt. In der folgenden, beispielsweisen Auswahl für geeignete Sulfonsäuren sind jedoch derartige Sulfonsäuren unter ihren systematischen Bezeichnungen angegeben: 3-Methyl-benzolsulfonsäure, Benzol-1,3-disulfonsäure, Methylbenzol-2,4-disulfonsäure, 2,4-Dimethyl-benzolsulfonsäure, 2,5-Dimethyl-benzolsulfon-säure, 2,6-Dimethyl-4-tert-butyl-benzolsulfonsaure, Hydrinden-5-sulfonsäure, Benzaldehyd-2,4-disulfonsäure, 4-Chlorbenzolsulfonsäure, 2,5-Dichlor-benzolsulfonsäure, 2-Amino-benzolsulfonsäure, 3-Amino-benzolsulfonsäure, Aminobenzol-2,5-disulfonsäure, 1,3-Diaminobenzol-4-sul-fonsäure, 1,3-Diaminobenzol-4,6-disulfonsäure, 1,4-Diami-nobenzol-2,5-disulfonsäure, 2-Amino-5-methyl-benzolsul-fonsäure, 2-Amino-3,5-dimethyl-benzolsulfonsäure, 2-Ami-no-4-sulfobenzoesäure, 2-Amino-5-sulfobenzoesäure, 2-Iso-butylamino-5-sulfobenzoesäure, 2-Hydroxy-5-sulfobenzoe-säure, 2-Aminophenyl-4-sulfonsäure, 3-Amino-4-methoxy-benzolsulfonsäure, 2-Aminophenol-4,6-disulfonsäure, 2-Amino-5-chlorbenzolsulfonsäure, 3-Amino-4-chlorbenzolsulfonsäure, 2-Amino-4,5-dichlorbenzolsulfonsäure, 4-Amino-2,5-dichlorbenzolsulfonsäure, 2-Amino-5-chlor-4-methyl-benzolsulfonsäure, 3-Amino-5-chlor-4-methylbenzolsulfon-säure, 4-Amino-5-chlor-3-methylbenzolsulfonsäure, 5-Ami-no-4-chlor-3-methylbenzolsulfonsäure, Anthrachinon-1-sul-fonsäure, Anthrachinon-2-sulfonsäure, Anthrachinon-1,5- und -1,8-disulfonsäure, Anthrachinon-2,6- und -2,7-disul-fonsäure, 2-, 4-, 5- oder 7-Hydroxy-naphthalin-1-sulfon-säure, 6- oder 7-Hydroxy-naphthalin-2-sulfonsäure, 4 - oder 7-Hydroxy-naphthalin-1,5-disulfonsäure, 4- oder 8 -Hydroxy-naphthalin-1,6-disulfonsäure, 7-Hydroxy-naphtha-lin-1,3-disulfonsäure, 3-, 4- oder 5-Hydroxy-naphthalin -2,7-disulfonsäure, 4-Hydroxy-naphthalin-2,5-disulfonsäure, 6-Hydroxy-naphthalin-1,4-disulfonsäure, 6-Hydroxy-naphthalin-1,7-disulfonsäure, 2-, 4-, 5-, 6-, 7- oder 8 -Amino-naphthali-n-1-sulfonsäure, 4-, 5-, 6-, 7-oder 8-Ami-no-naphthalin-2-sulfonsäure, 6- oder 7-Amino-naphthalin-1,3-disulfonsäure, 3- oder 4-Amino-naphthalin-1,5-disul-fonsäure, 4- oder 8-Amino-naphthalin-1,6-disulfonsäure, 4-Amino-naphthalin-1,7-disulfonsäure, 4-Amino-naphthalin-2,6-disulfonsäure, 1-, 3- oder 4-Amino-naphthalin-2,5-disulfonsäure, 8-Amino-naphthalin-1,3,6-trisulfonsäure, 7-Amino-naphthalin-1,3,5-trisulfonsäure, 4-Amino-naph-thalin-1,5,7-trisulfonsäure, 4-Amino-naphthalin-2,5,7-trisulfonsäure, 4-Amino-3- oder -5-hydroxy-naphthalin-1-sulfonsäure, 6-, 7- oder 8-Amino-4-hydroxy-naphthalin-2-sulfonsäure, 2- oder 4-Amino-5-hydroxy-naphthalin-1,7-disulfonsäure, 4-Amino-5-hydroxy-naphthalin-1,3-disul-fonsäure, 3- oder 4-Amino-5-hydroxy-naphthalin-2,7-di-sulfonsäure, 4,6- oder 6,7-Dihydroxy-naphthalin-2-sul-fonsäure, Naphthalin-1,5-, -1,6-, -2,7-, -2,5-, -3,6-, -2,6-disulfonsäure, Naphthalin-1,5,7- oder -2,5,7-tri-sulfonsäure, 4-Hydroxy-naphthalin-2,5,7-trisulfonsäure, 4,5-Dihydroxy-naphthalin-2,7-disulfonsäure, 4-Hydroxy-7-phenylamino-naphthalin-2-sulfonsäure.

Auch sauer reagierende Salze von Sulfonsäuren, insbesondere saure reagierende Natrium- oder Ammoniumsalze, wie z.B. das Na-Salz der 6,7-Dihydroxy-naphthalin-2-sulfon-säure, das sogenannte G-Salz (Na-Salz der 6-Hydroxy-napthalin-2,4-disulfonsäure) und das sogenannte R-Salz (Na-Salz der 6-Hydroxy-naphthalin-2,7-disulfonsäure) werden sorbiert.

Ferner sind geeignet: Thiophenol, m-Thiokresol, 2-Brom-thio-p-kresol, Ethanthiol, Phenylmethanthiol, 1,4-Butandithiol, 4-Merkapto-2-pyridin-carbonsäure, 2,3-Dimerkap-to-bernsteinsäure, Dithioessigsäure, Thioessig-O-säure, Thioessig-S-säure, Phthalimid, Succinimid, Benzolsulfimid.

In Gegenwart von Mineralsäuren werden durch die erfindungsgemaßen Copolymerisate Sulfonsauren bevorzugt sorbiert. Die erfindungsgemaßen Copolymerisate eignen sich auch zur selektiven Sorption von Schwermetallionen, wie z.B. Zink-, Kupfer- oder Quecksilberionen aus wäßrigen Lösungen. Vorzugsweise eignen sich die erfindungsgemaßen Copolymerisate zur Sorption von Carbonsäuren, insbesondere aus ihren wäßrigen Lösungen.

Die erfindungsgemäßen Copolymerisate weisen bei der Sorption von Carbonsäuren eine um mindestens 100% höhere Sorptionskapazität als die Austauscher gemäß DE-C2- 30 43 766 bei gleichzeitig geringerem

Quellvermögen in Lösungsmitteln auf. Die Sorption wird in an sich bekannter Weise durchgeführt. In der Regel wird das Säulen- oder Festbettverfahren angewandt, bei dem das Sorptionsmittel in eine Säule gefüllt wird, die dann von dem eine oder mehrere Säure Substanzen enthaltenden Lösungsmittel solange durchströmt wird, bis die Kapazität des Austauschers erschöpft ist. Anschließend erfolgt die Desorption der sorbierten sauren Stoffe ebenfalls in an sich bekannter Weise, so z.B. mit Laugen oder vorzugsweise mit Hilfe von organischen Lösungsmitteln, wie z.B. einem Alkohol, wie Methanol, Ethanol, i-Propanol, n-Sutanol, einem Keton, wie Aceton, Methyl-ethyl-keton, Diethyl-keton, einem Ester, wie Essigsäure-methyl- oder -ethyl-ester, Essigsäureethylglykolester, Essigsäure-ethyldiglykolester, einem Ether, wie z.B. Tetrahydrofuran, Dioxan, Ethylenglykoldimethyl- oder -diethyl-ether. Die desorbierten sauren Substanzen können einer anderweitigen Verwendung zugeführt werden.

Die Sorption und Desorption saurer Substanzen mit Hilfe der erfindungsgemäßen Polymerisate kann auch nach anderen bekannten Borptionsverfahren, wie z.B. nach kontinuierlichen Verfahren mit wanderndem Bett, nach dem Wirbelschichtverfahren oder im Satz-Betrieb durchgeführt werden.

Die Schwermetallionen werden ebenfalls in an sich bekannter Weise an den erfindungsgemäßen Adsorberharzen sorbiert und desorbiert.

Bei den erfindungsgemäßen Copolymerisaten wird durch den Gehalt an einem oder mehreren N-Vinyl-amiden der Formel I, z.B. die Sorption saurer Substanzen und vor allem die Desorption saurer Substanzen mittels organischer Lösungsmittel verbessert. Diese Verbesserung ist insbesondere bei Di- und Polycarbonsäuren, bei Aldehyd- und Ketocarbonsäuren, sowie bei höheren Gehalten an einem oder mehreren N-Vinyl-amiden der Formel I beträchtlich.

Die in den nachfolgenden Beispielen angegebenen Prozente sind Gewichtsprozente.

**Beispiel 1**

252g 1-Vinyl-imidazol und 108g N-Vinyl-N-methyl-acetamid werden zusammen mit 10g N,N-Bis-(methacryloyl)-aminoessigsäure unter Zusatz von 7,5g 27%iger Natronlauge gelöst und 0,5g Azoisobuttersäurenitril verrührt und in eine Lösung von 300ml Cyclohexan und 1g eines lipophilen Schutzkolloids eingerührt. Unter ständigem Rühren und Durchleiten von Stickstoff wird auf eine Innentemperatur von 65°C erwärmt und 1 h copolymerisiert.

Anschließend wird das erhaltene perlförmige Copolymerisat abgesaugt, mit 50 ml Wasser gewaschen und getrocknet. Die Ausbeute beträgt 314,3g (ca. 79,4% d.Th.).

In gleicher Weise erhält man Copolymerisate mit ähnlich strukturierten Oberflächen, wenn man anstelle von N,N-Bis-(methacryloyl)-aminoessigsäure 10g N,N'-Methylen-bis - acrylamid oder 10g N,N'-Methylen-bis-N-(methylolacrylamid) einsetzt.

In diesem und in den folgenden Beispielen wird, sofern nichts anderes angegeben ist, als lipophiles Schutzkolloid das Handelsprodukt®LX16-10MA der Firme Rivertex Ltd., Templefields Harlow, Essex, Great Britain, eingesetzt.

**Beispiel 2**

a) 60g (0,638 mol) 1-Vinyl-imidazol, 60g (0,6060 mol) N-Vinyl-N-methyl-acetamid werden zusammen mit 11,9g (0,07727 mol) N,N'-Methylen-bis-acrylamid in 135 ml Wasser und mit 0,75g 4,4'-Azobiscyanopentansäure gelöst und anschließend in eine Mischung aus 459 ml Benzin mit einem Siedebereich von 100 bis 140°C und 231 ml Perchlorethylen und 3g eines lipophilen Schutzkolloids eingerührt.

Unter ständigem Rühren und Durchleiten von Stickstoff wird auf 60 bis 70°C aufgeheizt und 1 h copolymerisiert. Das Wasser wird durch azeotrope Destillation entfernt, der Rückstand abgetrennt und mit Methanol gewaschen.

Die Ausbeute beträgt 107,2g (ca. 81,2% d.Th.) eines perlförmigen Copolymerisats.

b) Ein gleich gutes perlförmiges Copolymerisat wird erhalten durch eine Copolymerisation unter gleichen Bedingungen aus einem Gemisch von 72g (0,7659 mol) 1-Vinyl-imidazol, 168g (1,696 mol) N-Vinyl-N-methyl-acetamid und 23,8g (0,1545 mol) N,N'-Methylen-bis-acrylamid.

c) Ebenso ist es möglich, eine Mischung aus 54g (0,5744 mol) 1-Vinyl-imidazol, 306g (3,09 mol) N-Vinyl-N-methylacetamid und 35,6g (0,231 mol) N,N'-Methylen-bis-acrylamid zu copolymerisieren.

**Beispiel 3:**

a) In 78g (0,787- mol) 1-Vinyl-imidazol, 130g (1,313 mol) N-Vinyl-N-methyl-acetamid werden bei 30°C 52g (0,3376 mol) N,N'-Methylen-bis-acrylamid und 0,75g 4,4'-Azobis-cyanopentansäure gelöst und in eine Mischung aus 459 ml Benzin (Siedebereich 100 bis 140°C) und 231 ml Perchlorethylen mit 3g eines lipophilen

Schutzkolloids eingerührt. Unter ständigem Rühren und Durchleiten von Stickstoff wird auf 65 bis 70°C geheizt und 1,5 h copolymerisiert. Das Wasser wird durch azeotrope Destillation entfernt, der Rückstand abgesaugt, mit Methanol gewaschen und getrocknet.

Es wird ein perlförmiges Copolymerisat mit poröser Oberflachenstruktur erhalten.

b) Ein perlförmiges Copolymerisat gleicher Struktur mit gleich guten Eigenschaften erhält man, wenn in dem vorstehenden Beispiel N,N'-Methylen-bis-acrylamid durch die gleiche Menge N,N'-Methylen-bis-methacrylamid ersetzt wird.

c) 252g (2,680 mol) 1-Vinyl-imidazol, 108g (1,09 mol) N-Vinyl-N-methyl-acetamid, 35,7g (0,2318 mol) N,N'-Methylen-bis-acrylamid werden in 405 ml Wasser mit 2,25g 4,4'-Azobiscyanopentansäure gelöst und anschließend in eine Mischung aus 1377 ml Benzin mit einem Siedebereich von 100 bis 140°C und 693 ml Perchlorethylen, 9g eines lipophilen Schutzkolloids und 11,2g 1,7-Bis-(2-hydroxy-propyl)-1,1,3,3,5,5,7,7-octamethyl-tetrasiloxan-bis-acrylat eingerührt. Unter Rühren und Durchleiten von Stickstoff wird auf 80 bis 85°C geheizt und 45 min polymerisiert. Das Wasser wird durch azeotrope Destillation entfernt und das erhaltene Produkt mit Aceton gewaschen.

Die Ausbeute an perlförmigem, porösem polymerisat betrug 314,3g (d.h. 77,3% d.Th.).

d) 60g (0,638 mol) 1-Vinyl-imidazol, 60g (0,606 mol) N-Vinyl-N-methyl-acetamid, 11,9g (0,077 mol) N,N'-Methylen-bis-acrylamid werden zusammen mit 0,75g 4,4'-Azobiscyano-pentansäure in 135 ml Wasser gelöst und in eine Mischung aus 459 ml Benzin mit einem Siedepunktsbereich von 100 bis 140°C und 231 ml Perchlorethylen und 3g eines lipophilen Schutzkolloids und 3,75g 1,7-Bis-(2-hydroxypro-pyl)-1,1,3,3,5,5,7,7-octamethyl-tetrasiloxan-bis-acrylat eingeruhrt. Unter Rühren und Durchleiten von Stickstoff wird auf 60 bis 70°C hochgeheizt und 30 min polymerisiert. Anschließend wird 1 h nachgerührt und das Wasser durch azeotrope Destillation entfernt. Das Polymerisat wird abgetrennt und mit Aceton gewaschen.

Die Ausbeute beträgt 187,2g (ca. 81% d.Th.).

e) 78g (0,8297 mol) 1-Vinyl-imidazol, 130g (1,313 mol) N-Vinyl-N-methyl-acetamid, 52g (0,337 mol) N,N'-Methylen-bis-acrylamid werden zusammen mit 1,5g 4,4'-Azobiscyano-pentansäure in 271 ml Wasser gelöst und in eine Mischung aus 918 ml Benzin mit einem Siedebereich von 100 bis 140°C und 462g Perchlorethylen, 6g eines lipophilen Schutzkolloids und 7,5g 1,7-Bis-2-hydroxypropyl-1,1,3,3,-5,5,7,7-octamethyl-tetrasiloxan-bis-acrylat eingerührt. Unter Rühren und Durchleiten von Stickstoff wird auf 60 bis 70°C hochgeheizt und 30 min polymerisiert. Anschließend wird 1 h nachgerührt und das Wasser durch azeotrope Destillation entfernt.

Die Ausbeute beträgt 217g (ca. 83.5 % d.Th.).

**Beispiel 4:**

a) 30g 1-Vinyl-imidazol, 10g N-Vinyl-acetamid werden bei 30°C mit 5g N,N'-Methylen-bis-acrylamid verrührt und 45g Wasser mit 0,25g 4,4'-Azobiscyanopentansäure zugefugt. Diese Lösung wird in 300ml n-Heptan mit 1g lipophilem Schutzkolloid eingerührt. Unter ständigem Rühren und Durchleiten von Stickstoff wird auf 70 bis 75°C erwärmt und 1 Stunde copolynerisiert. Das erhaltene perlförmige Copolymerisat wird abgetrennt, gewaschen und getrocknet.

Die Ausbeute beträgt 44g.

b) In gleicher Weise erhält man ein perlförmiges Copolymerisat, wenn man anstelle von 10g N-Vinyl-acetamid 10g N-Vinyl-N-ethyl-acetamid oder 10g N-Vinyl-butyramid einsetzt.

**Beispeil 5:**

a) 120g 1-Vinyl-imidazol, 40g N-Vinyl-N-methyl-acetamid
und 20g N,N"-Methylen-bis-acrylamid werden bei Raumtemperatur mit 180ml Wasser und 1g 4,4'-Azobiscyanopentansäure verrührt. Diese Lösung wird in 1200ml n-Heptan, das 4g lipophiles Schutzkolloid enthält, eingerührt. Unter ständigem Rühren und Durchleiten von Stickstoff wird auf 65 bis 70°C erwärmt und 2 h copolymerisiert. Das erhaltene perlförmige Copolymerisat wird abgetrennt, gewaschen und getrocknet.

Die Ausbeute beträgt 162g.

b) Setzt man anstelle von 40g N-Vinyl-N-methyl-acetamid 40g N-Vinylformamid ein, so erhält man ein Produkt mit gleich guter Perlstruktur.

**Beispeil 6:**

a) 30g 1-Vinyl-1,2,4-triazol und 10g N-Vinyl-formamid werden zusammen mit 10g N,N'-Methylen-bis-methacrylamid und 0,25g 4,4'-Azobiscyanopentansäure verrührt und 50 ml Wasser zugefügt. Diese Lösung wird in eine Lösung von 1g lipophilem Schutzkolloid in 300ml n-Pentan eingetropft und unter ständigem Rühren und Durchleiten von Stickstoff auf 70°C hochgeheizt. Dann wird 1 h copolymerisiert. Das erhaltene perlförmige Copolymerisat wird abgesaugt, mit Aceton gewaschen und getrocknet.

Die Ausbeute beträgt 45g.

b) Ein Produkt gleichen Aussehens und Oberfläche erhält man, wenn die Menge an 1-Vinyl-1,2,4-triazol durch die gleiche Menge an 3-Vinyl-5-methyl-1,2,4-oxadiazol ersetzt wird.

Ebenso ist es möglich, das 1-Vinyl-1,2,4-triazol durch die gleiche Menge an-2-Vinyl-1,2,3,4-tetrazol zu ersetzen.

Die erhaltenen Copolymerisate besitzen die gleichen Eigenschaften.

**Beispeil 7**:

40g 1-Vinyl-1,2,3,4-tetrazol und 5g N-Vinyl-formamid werden zusammen mit 10g N,N'-Methylen-bis-methacrylsäureamid und 0,25g 4,4'-Azobiscyanopentansäure verrührt und 50ml Wasser zugefügt. Diese Lösung wird in eine Lösung von 1g lipophilem Schutzkolloid in 300ml n-Pentan eingetropft und unter ständigem Rühren und Durchleiten von Stickstoff auf 70°C hochgeheizt. Dann wird 1 h copolymerisiert. Das erhaltene perlförmige Copolymerisat wird abgesaugt, mit Aceton gewaschen und getrocknet.

Die Ausbeute beträgt 48g.

Zu gleich guten vernetzten perlförmigen Copolymerisaten gelangt man, wenn 20g 1-Vinyl-1,2,3,4-tetrazol, 10g 1-Vi-nyl-imidazol und 10g N,N'-Methylen-bis-methacrylamid unter den oben genannten Bedingungen copolymerisiert werden.

**Beispiel 8**:

30g 1-Allyl-1,2,3,4-tetrazol, 10g N,N'-Methylen-bis-methacrylsäureamid, 5g N-Vinyl-N-methyl-acetamid, 5g 1-Me-thyl-5-vinyl-1,2,3,4-tetrazol und 0,25g 4,4'-Azobiscyano-pentansäure werden miteinander verrührt und 50ml Wasser zugefügt. Diese so hergestellte Lösung wird in eine Lösung von 1g lipophilem Schutzkolloid in 400ml n-Pentan eingetropft und unter ständigem Rühren und Durchleiten von Stickstoff auf 70°C hochgeheizt. Dann wird 1 h copolymerisiert. Das erhaltene perlförmige Copolymerisat wird abgesaugt, mit Methanol gewaschen und getrocknet.

Die Ausbeute beträgt 45g.

Zu einem hochvernetzten perlförmigen Copolymerisat mit gleich guter Adsorption gelangt man, wenn man 1-Allyl-1,2,3,4-tetrazol durch die gleiche Menge an 3-Vinyl-1,2,4-oxadiazol oder durch 3-Isopropenyl-1,2,4-oxadiazol ersetzt.

**Beispiel 9**:

40g 2-Isopropenyl-1,3,4-oxadiazolin-5-on, 5g N-Vinylformamid, 10g Vinylphosphonsäure-diallylester werden zusammen mit 0,25g 4,4'-Azobiscyanopentansäure verrührt und 50ml Wasser zugefügt. Diese so hergestellte Lösung wird in eine Lösung von 2g lipophilem Schutzkolloid in 300ml Cyclohexan gegeben. Unter ständigem Rühren und Durchleiten von Stickstoff und Anheizen auf 60°C wird 1 h copolymerisiert. Das erhaltene hochvernetzte perlförmige Copolymerisat wird mit Aceton gewaschen und getrocknet.

**Beispeil 10**

30g 2-Vinyl-2-oxazolin und 10g N-Vinyl-N-methyl-acetamid werden zusammen mit 20g N,N-Bis-(methacryloyl)-aminoessigsäure unter Zusatz von 15g 27%iger Natronlauge und 1g Azoisobuttersäuredinitril verrührt und in eine Lösung von 1g Hydroxyethylcellulose (als lipophiles Schutzkolloid) in 300ml Cyclohexan gegeben. Unter ständigem Rühren und Durchleiten von Stickstoff wird auf eine Innentemperatur von 65°C erwärmt und 1 h copolymerisiert.

Die Ausbeute beträgt 50g perlformiges Copolymerisat.

In gleicher Weise ist es möglich, ebenso gute hochvernetzte Copolymerisate zu erhalten, wenn man 30g 2-Vinyl-2-oxazolin durch 30g 2-Isopropenyl-2-oxazolin oder durch 30g 2-Vinyl-3-methyl-oxazolidin ersetzt. Dabei werden ähnliche Ausbeuten von Produkten mit vergleichbaren Eigenschaften erhalten.

**Beispeil 11:**

30g 4-Vinyl-thiazol und 10g N-Vinyl-N-methyl-acetamid werden zusammen mit 20g N,N'-Methylem-bis-(N-methylolacrylamid) und 1g 4,4'-Azobiscyanopentansäure verrührt und 45ml Wasser zugefügt und anschließend in eine Lösung von 1g lipophilem Schutzkolloid in 300ml n-Pentan gegeben. Unter ständigem Rühren und Durchleiten von Stickstoff wird auf 70°C angeheizt und 1 h copolymerisiert. Das entstandene hochvernetzte perlförmige Copolymerisat wird abgetrennt, gewaschen und getrocknet.

Die Ausbeute beträgt 55g.

In gleicher Weise kann man ein gleich gut struktuiertes perlförmiges Copolymerisat erhalten, wenn man 30g 4-Vi-nylthiazol durch 30g 2-Vinyl-thiazol ersetzt.

**Beispeil 12:**

30g N-Vinyl-2-imidazolin und 10g N-Vinyl-N-methyl-acetamid und 20g Tris-acryloyl-perhydrotriazin werden unter Zusatz von 7,5g 27%iger wäßriger Natronlauge auf pH 9 eingestellt und 0,5g Azoisobuttersäurenitril zugefügt und diese Lösung in eine Lösung aus 300ml Cyclohexan und 1g lipophilem Schutzkolloid eingerührt. Unter ständigem Rühren und Durchleiten von Stickstoff wird auf 70°C geheizt und 1 h copolymerisiert. Das erhaltene hochvernetzte perlförmige Copolymerisat wird abgetrennt, mit Methanol gewaschen und getrocknet.

Die Ausbeute beträgt 50g.

Zu gleich guten perlförmigen Copolymerisaten gelangt man, wenn man 1-Vinyl-2-imidazolin durch 1-Vinyl-2-methyl-imidazol ersetzt.

**Beispiel 13:**

a) 35g 1-Vinyl-imidazol, 5g N-Vinyl-N-methyl-acetamid, 2,5g N,N'-Methylen-bis-acrylamid und 2,5g 1,7-Bis-(2-hy-droxypropyl)-1,1,3,3,5,5,7,7-octamethyl-tetrasiloxan-bis-acrylat werden zusammen mit 4,4'Azobiscyanopentansäure und 45ml Wasser gelöst und in 300 ml n-Heptan und 1g lipophilem Schutzkolloid eingerührt. Unter ständigem Rühren und Durchleiten von Stickstoff wird auf 70°C geheizt und 1 h copolymerisiert. Das entstandene hochvernetzte, struktuierte perlförmige Copolymerisat wird abgetrennt, mit Aceton gewaschen und getrocknet.

Die Ausbeute beträgt 42g.

b) In gleicher Weise erhält man ein perlförmiges Copolymerisat von gleichen Eigenschaften durch Einsatz von 2,5g N,N'-Methylen-bis-methacrylamid und 2g Methacrylsäure-(3-triethoxysilylpropyl)ester anstelle von N,N'-Methylenbis-acrylamid und 1,7-Bis-(2'-hydroxypropyl)-1,1,3,3,-5,5,7,7-octamethyl-tetrasiloxan-bis-acrylat.

c) Ein ähnliches perlförmiges Copolymerisat erhält man durch Einsatz von 35g 1-Vinyl-1,2,3,4-tetrazol, 5g N-Vinyl-formamid, 2,5g N,N'-Methylen-bis-acrylamid und 2,5g Vinyl-tri-ethoxysilan.

**Beispeil 14**

60g (0,638 mol) 1-Vinyl-imidazol, 60g (0,606 mol) N-Vinyl-N-methyl-acetamid und 11,9g (0,036 mol) Polyethylen-glykol-200-dimethacrylat werden zusammen mit 0,75g 4,4'-Azobiscyanopentansäure in 135 ml Wasser gelöst und unter Rühren und Darüberleiten von Stickstoff in eine Mischung aus 459 ml Benzin von einem Siedebereich von 100 bis 140°C und 231 ml Perchlorethylen eingerührt, die noch 3g eines lipophilen Schutzkolloids und 3,75g 1,7-Bis-(2-hy-droxypropyl)-1,1,3,3,5,5,7,7-octamethyl-tetrasiloxan-bis-acrylat enthält. Es wird auf 70°C angeheizt und 30 min copolymerisiert und 1 h nachgerührt.

Die Ausbeute beträgt 90,5g (ca. 68,6% d.Th.). Ein Produkt mit gleich guten Eigenschaften erhält man, wenn anstelle von Polyethylenglykol-200-dimethacrylat 11,9g (0,016 mol) Polyethylenglykol-600-dimethacrylat eingesetzt werden.

**Beispiel 15:**

60g (0,638 mol) 1-Vinyl-imidazol, 60g (0,606 mol) N-Vinyl-N-methyl-acetamid und 11,9g (0,028 mol) N,N',N''-Tris-(2-acryloyloxy-ethyl)-isocyanurat werden zusammen mit 0,75g 4,4'-Azobiscyanopentanäure in 135 ml Wasser gelöst und unter Rühren in eine Mischung aus 459 ml Benzin mit einem Siedebereich von 100 bis 140°C und 231 ml Perchlorethylen unter Darüberleiten von Sticktoff eingerührt, auf 70°C erwärmt und 1 h bei dieser Temperatur polymerisiert.

In dem organischen Lösungsmittelgemisch befinden sich noch 3g eines lipophilen Schutzkolloids und 3,75g

1,7-Bis-(2-hydroxypropyl)-1,1,3,3,5,5,7,7-octamethyl-tetra-siloxan-bis-acrylat.
Die Ausbeute beträgt 107.8g (ca. 81,7% d.Th.).

**Beispeil 16**:

100g (1,06 mol) 1-Vinyl-imidazol, 20g (0,202 mol) N-Vinyl-N-methyl-acetamid und 11,9g (0,036 mol) Polyethylen-glykol-200-dimethacrylat werden in 135 ml Wasser zusammen mit 0,75g 4,4'-Azobiscyanopentansäure gelöst und in eine Mischung aus 459 ml Benzin mit einem Biedebereich von 100 bis 140°C und 231 ml Perchlorethylen, die noch 3g eines lipophilen Schutzkolloids und 3,75g 1,7-Bis-(2-hydroxy-propyl)-1,1,3,3,5,5,7,7-octamethyl-tetrasiloxan-bis-acrylat enthält unter Darüberleiten von Stickstoff eingerührt. Anschließend wird auf 70°C geheizt und 1 h polymerisiert. Dann wird das Produkt abgetrennt und mit Aceton gewaschen.
Ausbeute: 100,2g (ca 76 % d.Th.).

**Beispeil 17**:

60g (0,638 mol) 1-Vinyl-imidazol, 60g (0,606 mol) N-Vimyl-N-methyl-acetamid, 5,95g (0,018 mol) Polyethylengly-kol-200-dimethacrylat und 5,95g (0,038 mol) N,N'-Methylen-bis-acrylamid werden zusammen mit 0,75g 4,4'-Azobis-cyanopentansäure in 135 ml Wasser gelöst und unter Darüberleiten von Stickstoff in eine Mischung aus 459 ml Benzin mit einem Siedebereich von 100 bis 140°C und 231 ml Perchlorethylen, die noch 3g eines lipophilen Schutzkolloids und 3,75g 1,7-Bis-(2-hydroxypropyl)-1,1,3,3,5,5, 7,7-octamethyl-tetrasiloxan-bis-acrylat enthält, eingerührt, auf 70°C geheizt und 1 h polymerisiert.
Die Ausbeute beträgt 114,4g (ca. 86,7 % d.Th.).

**Beispeil 18**:

25g (0,266 mol) 1-Vinyl-imidazol, 5g (0,050 mol) N-Vinyl-N-methyl-acetamid, 10g Methacrylsäure-β-hydroxyethylester und 5g (0,050 mol) N,N'-Methylen-bis-acrylamid werden zusammen mit 0,25g 4,4'-Azobiscyanopentansäure in 45 ml Wasser gelöst und in 230 ml n-Heptan, das 1g eines lipophilen Schutzkolloids und 2,5g Bis-(2-hydroxypro-pyl)-1,1,3,3,5,5,7,7-octamethyltetrasiloxan-bisacrylat enthält, unter Darüberleiten von Stickstoff eingerührt. Dann wird auf 77°C aufgeheizt und 1 h polymerisiert und das Produkt nach dem Waschen mit Aceton abgetrennt.
Ausbeute: 45,3g (ca.100 % d.Th.).

**Beispeil 19**:

Zur Bestimmung der Austauschkapazität werden 50g Copolymerisat in eine Glassäule mit einem Innendurchmesser von 25mm gepackt und eine 1%ige wäßrige D-Milchsäurelösung mit einer Geschwindigkeit von 2,0 Bettvolumina/h solange durchgeleitet, bis der Ablauf sauer wird. Zur Desorption der D-Milchsäure werden 650ml Methanol oder Aceton mit einer Geschwindigkeit von 1,8 Bettvolumen/h durch die Säule geleitet und im Eluat die D-Milchsäure quantitativ enzymatisch mit Lactatdehydrogenase bestimmt. Bei dieser Kapazitätsbestimmung durch Sorption und Desorption werden bei Verwendung verschiedener Copolymerisate die in der folgenden Tabelle angegebenen Kapazitäts-Werte erhalten:

| Copolymerisat gemäß | Kapazität in g D-Milchsäure/100g Polymerisat |
|---|---|
| Beispiel 4 | 45 |
| Beispiel 5a | 48 |
| Beispiel 5b | 46 |
| Beispiel 6a | 71 |
| Beispiel 13a | 81 |
| Beispiel 13b | 76 |
| Beispiel 13c | 74 |
| Beipsiel 1 der DE-C2- 30 43 766 | 8 |

In gleicher Weise ist es möglich, mit den neuen erfindungsgemäßen Copolymerisaten, z.B. Ameisensäure, Essigsäure, Propionsäure, n-Buttersäure, i-Buttersäure, Valeriansäure, Capronsäure, Caprinsäure, Glykolsäure, Äpfelsäure, Malonsäure, Bernsteinsäure, Oxalsäure, Glutarsäure, Adipinsäure, Maleinsäure, Fumarsäure,

Zitronensäure, Tricarballylsäure, Weinsäure, Glyoxylsäure und Phenole zu sorbieren und anschließend mit Lösungsmitteln wie z.B. Aceton, Methanol, Essigsäureethylester, Tetrahydrofuran, Dioxan, Dimethoxyethan wie-der zu eluieren.

**Beispeil 20:**

100g eines bei der Fabrikation von gamma-Säure (1-Hydro-xy-7-amino-naphthalin-3-sulfonsäure) anfallenden sauren wäßrigen Filtrats, das gamma-Säure, Schwefelsaure und Natriumsalze, insbesondere auch das Natriumsalz der gamma-Säure enthält, werden mit 50g Wasser und 10g des Produkts gemäß Beispiel 4, 30 min lang verrührt. Dann wird abgesaugt und mit Wasser gewaschen.

Vor und nach der Behandlung mit dem Adsorberharz werden in der Lösung die Acidität und die diazotierbaren Anteile wie folgt bestimmt. (Durch die Bestimmung der diazotierbaren Anteile wird der Gehalt an gamma-Säure plus gamma-Säure-Na-Salz erfaßt):

vor der Behandlung nach derBehandlung
Acidität 3,06 mval 0,204 mval
Diazotierbare
Anteile 1,66 mol% 0,05 mol%

Die Adsorptionskapazität berechnet sich zu 93,3%. Neben der gamma-Säure wird auch ihr Na-Salz sorbiert.

Die Desorption erfolgt z.B. mit verdünnter Natronlauge.

**Beispeil 21**

2g des Produkts gemäß Beispiel 4 werden mit einem Wasser-Methanol-Gemisch (Volumenverhältnis 1: 1) angeschlämmt und in eine Glassäule mit einem Durchmesser von 1,5cm gefüllt. Die Schüttung wird mit 500ml Wasser gewaschen.

Dann wird eine wäßrige Lösung von Zinkchlorid mit einem pH von 2 und einem Zn++ Gehalt von $1.10^{-6}$g/ml auf die Säule gegeben und der Zinkgehalt in dem in Fraktionen unterteilten Durchlauf bestimmt. In den ersten 1280 ml des Durchlaufs liegt der Zn++ Gehalt unter $1.10^{-8}$g/ml, dann steigt er auf $1{,}2.10^{-7}$g/ml an.

**Patentansprüche**

fü die Vertragsstaaten BE CH DE FR GB IT LI NL SE

1. Vernetztes poröses, perlförmiges Copolymerisat, dadurch gekennzeichnet, daß es 50 bis 99,9 Gew.% wiederkehrender Einheiten einer eine einzige polymerisierbare olefinische Gruppe enthaltenden heterocyclischen 5-Ring-verbindung, die im Ring mindestens ein protonierbares Stickstoffatom besitzt, oder mehrerer derartiger Verbindungen, 0,1 bis 50 Gew.% Einheiten eines Vernetzers oder mehrerer derartiger Vernetzer, 0 bis 25 Gew.% Einheiten einer polymerisierbaren bor- oder silizium-organischen Verbindung oder mehrerer derartiger Verbindungen und, bezogen auf 100 Gew.% der Summe der vorgenannten Einheiten 5 bis 350 Gew.% Einheiten eines N-Vinyl-amids der allgemeinen Formel I $CH_2=CH-N(R^1)-C(R^2)=O$, worin $R^1$ Wasserstoff, Methyl oder Ethyl und $R^2$ Wasserstoff oder $(C_1-C_3)$Alkyl bedeuten, oder mehrerer derartiger N-Vinylamide und 0 bis 40 Gew.% Einheiten einer anderen polymerisierbaren Verbindung oder mehrerer derartiger Verbindungen enthält.

2. Copolymerisat nach Anspruch 1, dadurch gekennzeichnet, daß es 50 bis 9S Gew.% wiederkehrender Einheiten einer eine einzige polymerisierbare olefinische Gruppe enthaltenden heterocyclischen 5-Ringverbindung, die im Ring mindestens ein protonierbares Stickstoffatom besitzt, oder mehrerer derartiger Verbindungen, 5 bis 50 Gew.% Einheiten eines Vernetzers oder mehrerer derartiger Vernetzer, 0 bis 25 Gew.% Einheiten einer polymerisierbaren bor- oder silizium-organischen Verbindung oder mehrerer derartiger Verbindungen und, bezogen auf 100 Gew.% der Summe der vorgenannten Einheiten, 10 bis 250 Gew.% Einheiten eines N-Vinyl-amids der allgemeinen Formel I oder mehrerer derartiger N-Vinyl-amide und 0 bis 25 Gew.% Einheiten einer anderen polymerisierbaren Verbindung oder mehrerer derartiger Verbindungen enthält.

3. Copolymerisat nach Anspruch 1 und/oder 2, dadurch gekennzeichnet, daß es 0,1 bis 10 Gew.% Einheiten einer polymerisierbaren bor- oder silizium-organischen Verbindung enthält.

4. Copolymerisat nach einem oder mehreren der Ansprüche 1 bis 3, dadurch gekennzeichnet, das es keine Einheiten anderer polymerisierbarer Verbindungen enthält.

5. Copolymerisat nach einem oder mehreren der Ansprüche 1 bis 4, dadurch gekennzeichnet, daß es als Vernetzer Einheiten von N,N'-Methylen-bis-acrylamid und/oder N,N'-Methylen-bis-methacrylamid und/oder Ethylenglykol-diacrylat und/oder Ethylenglykol-dimethacrylat und/oder Diethylenglykol-diacrylat und/oder Diethylenglykol-dimethacrylat und/oder Polyethylenglykol 200 bis 600-diacrylat und/oder Polyethylenglykol 200 bis 600-dimethacrylat und/oder N,N,N''-Tris-(2-acryloyloxy-ethyl)-isocyanurat und/oder N,N',N''-Tris-(2-methacryloyloxy-ethyl)-isocyanurat enthält.

6. Verfahren zur Herstellung des vernetzten, porösen, perlförmigen Copolymerisats der Anspruche 1 bis 5 durch Copolymeiisation, dadurch gekennzeichnet, daß 50 bis 99,9 Gew % einer oder mehrerer heterocyclischer 5-Ringverbin-dungen, die eine einzige polymerisierbare olefinische Gruppe enthalten und im Ring mindestens ein protonierbares Stickstoffatom besitzen, 0,1 bis 50 Gew.% eines oder mehrerer Vernetzer, 0 bis 25 Gew.% einer oder mehrerer polymerisierbarer bor- und/oder silizium-organischer Verbindungen und, bezogen auf 100% der Summe der vorgenannten Verbindungen, 5 bis 350 Gew.% Einheiten eines N-Vinyl-amids der allgemeinen Formel I $CH_2=CH-N(R^1)-C(R^2)=O$, worin $R^1$ Wasserstoff, Methyl oder Ethyl und $R^2$ Wasserstoff oder $(C_1-C_3)$Alkyl bedeuten, oder mehrerer derartiger N-Vinyl-amide und 0 bis 40 Gew.% Einheiten einer anderen polymerisierbaren Verbindung oder mehrerer derartiger Verbindungen nach dem Verfahren der umgekehrten Suspensionspolymerisation copolymerisiert werden.

7. Verfahren nach Anspruch 5, dadurch gekennzeichnet, daß 50 bis 95 Gew.% einer eine einzige polymerisierbare olefinische Gruppe enthaltenden heterocyclischen 5-Ring -Verbindung, die im Ring mindestens ein protonierbares Stickstoffatom besitzt, oder mehrerer derartiger Verbindungen, 5 bis 50 Gew.% eines Vernetzers oder mehrerer derartiger Vernetzer, 0 bis 25 Gew.% einer oder mehrerer polymerisierbarer bor- und/oder silizium-organischer Verbindungen und, bezogen auf 100 % der Summe der vorgenannten Verbindungen, 10 bis 250 Gew.% eines oder mehrerer N-Vinylamide der allgemeinen Formel I und 0 bis 25 Gew.% Einheiten einer anderen polymerisierbaren Verbindung oder mehrerer derartiger Verbindungen copolymerisiert werden.

8. Verfahren nach Anspruch 6 und/oder 7, dadurch gekennzeichnet, daß bei der Copolymerisation keine Verbindungen aus der Gruppe der anderen polymerisierbaren Verbindungen eingesetzt werden.

9. Verfahren nach einem oder mehreren der Ansprüche 6 bis 8, dadurch gekennzeichnet, daß 0,1 bis 10 Gew.% einer polymerisierbaren bor- und/oder silizium-organischen Verbindung eingesetzt werden.

10. Verfahren zur Abtrennung saurer Substanzen aus waßrigen Lösungen durch Sorption an einem Austauscherharz und anschließende Elution mit einem organischen Lösungsmittel, dadurch gekennzeichnet, daß als Austauscherharz ein Copolymerisat nach einem oder mehreren der Ansprüche 1 bis 5 verwendet wird.

11. Verwendung eine Copolymerisats eines oder mehrerer Anspruche 1 bis 5 zur Sorption von Schwermetallionen aus wäßriger Lösung.

**Patentansprüche**

für den Vertragsstaat AT

1 Verfahren zur Herstellung eines vernetzten, porösen, perlförmigen Copolymerisats durch Copolymerisation, dadurch gekennzeichnet, daß 50 bis 99,9 Gew.% einer oder mehrerer heterocyclischer 5-Ringverbindungen, die eine einzige polymerisierbare olefinische Gruppe enthalten und im Ring mindestens ein protonierbares Stickstoffatom besitzen, 0,1 bis 50 Gew.% eines oder mehrerer Vernetzer, 0 bis 25 Gew.% einer oder mehrerer polymerisierbarer bor- und/oder silizium-organischer Verbindungen und, bezogen auf 100% der Summe der vorgenannten Verbindungen, 5 bis 350 Gew.% Einheiten eines N-Vinyl-amids der allgemeinen Formel I $CH_2=CH-N(R^1)-C(R^2)=O$, worin $R^1$ Wasserstoff, Methyl oder Ethyl und $R^2$ Wasserstoff oder $(C_1-C_3)$Alkyl bedeuten, oder mehrerer derartiger N-Vinylamide und 0 bis 40 Gew.% Einheiten einer anderen polymerisierbaren Verbindung oder mehrerer derartiger Verbindungen nach dem Verfahren der umgekehrten Suspensionspolymerisation copolymerisiert werden.

2. Verfahren nach Anspruch 1, dadurch gekennzeichnet, daß 50 bis 95 Gew.% einer eine einzige polymerisierbare olefinische Gruppe enthaltenden heterocyclischen 5-Ring-Verbindung, die im Ring mindestens ein protonierbares Stickstoffatom besitzt, oder mehrerer derartiger Verbindungen, 5 bis 50 Gew.% eines Vernetzers oder mehrerer derartiger Vernetzer, 0 bis 25 Gew.% einer oder mehrerer polymerisierbarer bor- und/oder silizium-organischer Verbindungen und, bezogen auf 100 % der Summe der vorgenannten Verbindungen, 10 bis 250 Gew.% eines oder mehrerer N-Vinyl-amide der allgemeinen Formel I und 0 bis 25 Gew.% Einheiten einer anderen polymerisierbaren Verbindung oder mehrerer derartiger Verbindungen copolymerisiert werden.

3. Verfahren nach Anspruch 1 und/oder 2, dadurch gekennzeichnet, daß bei der Copolymerisation keine Verbindungen aus der Gruppe der anderen polymerisierbaren Verbindungen eingesetzt werden.

4. Verfahren nach einem oder mehreren der Ansprüche 1 bis 3, dadurch gekennzeichnet, daß 0,1 bis 10 Gew.% einer polymerisierbaren bor- und/oder silizium-organischen Verbindung eingesetzt werden.

5. Verfahren nach einem oder mehreren der Anspruche 1 bis 4, dadurch gekennzeichnet, daß als Vernetzer N,N'-Methylen bis-acrylamid und/oder N,N'-Methylen-bis-methacrylamid und/oder Ethylenglykol-diacrylat und/oder Ethylenglykol-dimethacrylat und/oder Diethylenglykol-diacrylat und/oder Diethylenglykol-dimethacrylat und/oder Polyethylenglykol 200 bis 600-diacrylat und/oder Polyethylenglykol 200 bis 600-dimethacrylat und/oder N,N',N''-Tris-(2-acryloyloxy-ethyl)-isocyanurat und/oder N,N',N'-Tris-(2-methacryloyloxy-ethyl)-isocyanurat eingesetzt wird.

6. Verfahren zur Abtrennung saurer Substanzen aus wäßrigen Lösungen durch Sorption an einem Austauscherharz und anschließende Elution mit einem organischen Lösungsmittel, dadurch gekennzeichnet, daß als Austauscherharz ein nach einem oder mehreren der Anspruche 1 bis 5 herstellbares Copolymerisat

verwendet wird.

7. Verwendung eines Copolymerisats, das nach einem oder mehreren der Ansprüche 1 bis 5 herstellbar ist, zur Sorption von Schwermetallionen aus wäßriger Lösung.

**Claims**

for the Contracting States: BE, CH, DE, FR, GB, IT, LI, NL, SE

1. Crosslinked, porous copolymer in the form of beads, characterised in that it contains 50 to 99.9 % by weight of recurring units of a heterocyclic 5-membered ring compound which contains a single polymerisable olefinic group and which has at least one protonisable nitrogen atom in the ring, or several such compounds, 0.1 to 50 % by weight of units of a crosslinking agent or several such crosslinking agents, 0 to 25 % by weight of units of a polymerisable organoboron or organosilicon compound or several such compounds and, relative to 100 % by weight of the sum of the abovementioned units, 5 to 350 % by weight of units of an N-vinylamide of the general formula I $CH_2=CH-N(R^1)-C(R^2)=O$ wherein $R^1$ denotes hydrogen, methyl or ethyl and $R^2$ denotes hydrogen or $C_1$-$C_3$-alkyl, or several such N-vinylamides and 0 to 40 % by weight of units of another polymerisable compound or several such compounds.

2. Copolymer according to Claim 1, characterised in that it contains 50 to 95 % by weight of recurring units of a heterocyclic 5-membered ring compound which contains a single polymerisable olefinic group and has at least one protonisable nitrogen atom in the ring, or several such compounds, 5 to 50 % by weight of units of a crosslinking agent or several such crosslinking agents, 0 to 25 % by weight of units of polymerisable organoboron or organosilicon compound or several such compounds and, relative to 100 % by weight of the sum of the above mentioned units, 10 to 250 % by weight of units of an N-vinylamide of the general formula I or several such N-vinylamides and 0 to 25 % by weight of units of another polymerisable compound or several such compounds.

3. Copolymer according to Claim 1 and/or 2, characterised in that it contains 0.1 to 10 % by weight of units of a polymerisable organoboron or organosilicon compound.

4. Copolymer according to one or more of Claims 1 to 3, characterised in that it contains no units of other polymerisable compounds.

5. Copolymer according to one or more of Claims 1 to 4, characterised in that it contains, as the crosslinking agent, units of N,N'-methylene bis acrylamide and/or N,N'-methylenebismethacrylamide and/or ethylene glycol diacrylate and/or ethylene glycol dimethacrylate and/or diethylene glycol diacrylate and/or diethylene glycol dimethacrylate and/or polyethylene glycol 200 to 600 diacrylate and/or polyethylene glycol 200 to 600 dimethacrylate and/or N,N',N"tris-(2-acryloyloxyethyl) isocyanurate and/or N,N',N"-tris-(2-methacryloyloxyethyl) isocyanurate.

6. Process for the preparation of the crosslinked porous, bead-shaped copolymers of Claim 1 to 5 by copolymerisation, characterised in that 50 to 99.9 % by weight of one or more heterocyclic 5-membered ring compounds which contain a single polymerisable olefinic group and have at least one protonisable nitrogen atom in the ring, 0.1 to 50 % by weight of one or more crosslinking agents, 0 to 25 % by weight of one or more polymerisable organoboron and/or organosilicon compounds and, relative to 100 % of the sum of the abovementioned compounds, 5 to 350 % by weight of units of an N-vinylamide of the general formula I $CH_2=CH-N(R^1)-C(R^2)=O$ wherein $R^1$ denotes hydrogen, methyl or ethyl and $R^2$ denotes hydrogen or $C_1$-$C_3$-alkyl, or several such N-vinylamides and 0 to 40 % by weight of units of another polymerisable compound or several such compounds are copolymerised by the process of inverted suspension polymerisation.

7. Process according to Claim 5, characterised in that 50 to 95 % by weight of a heterocyclic 5-membered ring compound which contains a single polymerisable olefinic group and which has at least one protonisable nitrogen atom in the ring, or several such compounds, 5 to 50 % by weight of a crosslinking agent or several such compounds, 0 to 25 % by weight of one or more polymerisable organoboron and/or organosilicon compounds and, relative to 100 % of the sum of the abovementioned compounds, 10 to 250 % by weight of one or more N-vinylamides of the general formula I and 0 to 25 % by weight of units of another polymerisable compound or several such compounds are copolymerised.

8. Process according to Claim 6 and/or 7, characterised in that no compounds belonging to the group of other polymerisable compounds are employed in the copolymerisation.

9. Process according to one or more of Claims 6 to 8, characterised in that 0.1 to 10 % by weight of a polymerisable organoboron and/or organosilicon compound are employed.

10. Process for the removal of acid substances from aqueous solutions by sorption on an exchange resin and subsequent elution with an organic solvent, characterised in that the exchange resin used is a copolymer according to one or more of Claims 1 to 5.

11. Use of a copolymer of one or more of claims 1 to 5 for the sorption of heavy metal ions from aqueous solution.

**Claims**

for the Contracting State: AT

1. Process for the preparation of a crosslinked, porous copolymer in the form of beads, characterised in that 50 to 99.9 % by weight of one or several heterocyclic 5-membered ring compounds which contain a single polymerisable olefinic group and which have at least one protonisable nitrogen atom in the ring, 0.1 to 50 % by weight of one or several crosslinking agents, 0 to 25 % by weight of one or several polymerisable organoboron and/or organosilicon compounds and, relative to 100 % by weight of the sum of the abovementioned compounds, 5 to 350 % by weight of units of an N-vinylamide of the general formula I $CH_2{=}CH\text{-}N(R^1)\text{-}C(R^2){=}O$ wherein $R^1$ denotes hydrogen,

methyl or ethyl and $R^2$ denotes hydrogen or $C_1$-$C_3$-alkyl, or several such N-vinylamides and 0 to 40 % by weight of units of another polymerisable compound or several such compounds, are copolymerised by the process of inverted suspension polymerisation.

2. The process of Claim 1, characterised in that 50 to 95 % by weight of one heterocyclic 5-membered ring compound which contains a single polymerisable olefinic group and has at least one protonisable nitrogen atom in the ring, or several such compounds, 5 to 50 % by weight of a crosslinking agent or several such crosslinking agents, 0 to 25 % by weight of one or several polymerisable organoboron or organosilicon compounds and, relative to 100 % by weight of the sum of the abovementioned compounds, 10 to 250 % by weight of one or several N-vinylamides of the general formula I and 0 to 25 % by weight of units of another polymerisable compound or several such compounds, are copolymerised.

3. The process of Claim 1 and/or 2, characterised in that in the copolymerisation no compounds from the group of the other polymerisable compounds are used.

4. The process of one or more of Claims 1 to 3, characterised in that it contains 0.1 to 10 % by weight of a polymerisable organoboron and/or organosilicon compound are employed.

5. The process of one or more of Claims 1 to 4, characterised in that the crosslinking agent used is N,N'-methylenebisacrylamide and/or N,N'-methylene bismethacrylamide and/or ethylene glycol diacrylate and/or ethylene glycol dimethacrylate and/or diethylene glycol diacrylate and/or diethylene glycol dimethacrylate and/or polyethylene glycol 200 to 600 diacrylate and/or polyethylene glycol 200 to 600 dimethacrylate and/or N,N',N"tris-(2-acryloyloxyethyl) isocyanurate and/or N,N',N"-tris-(2-methacryloyloxyethyl) isocyanurate.

6. Process for the removal of acid substances from aqueous solutions by sorption on an exchange resin and subsequent elution with an organic solvent, characterised in that the exchange resin used is a copolymer that can be produced according to one or more of Claims 1 to 5.

7. Use of a copolymer that can be produced according to one or more of Claims 1 to 5, for the sorption of heavy metal ions from aqueous solution.

**Revendications**

pour les Etats contractants: BE, CH, DE, FR, GB,IT, LI, NL, SE.

1. Copolymère réticulé poreux en perles, caractérisé en ce qu'il comtient de 50 à 99,9% em poids de motifs répétés d'un composé hétérocyclique à cycle pentagonal qui renferme un seul radical éthylénique polymérisable et dont le cycle contient au moins un atome d'azote protonable, ou de plusieurs composés de ce genre, de 0,1 à 50% en poids de motifs d'un ou de plusieurs réticulants, de 0 à 25% en poids de motifs d'un compose organique du bore ou du silicium polymérisable, ou de plusieurs composés de ce genre, et, pour 100% en poids de l'ensemble des motifs qui viennent d'être mentionnés, de 5 à 350% en poids de motifs d'un N-vinyl-amide répondant à la formule générale I:

$CH_2{=}CH\text{-}N(R^1)\text{-}C(R^2){=}O$ (I)

dans laquelle $R^1$ représente l'hydrogène, un radical méthyle ou un radical éthyle et $R^2$ l'hydrogène ou un radical alkyle en $C_1$-$C_3$, ou de plusieurs N-vinyl-amides de ce genre, et de 0 à 40% en poids de motifs d'un ou de plusieurs autres composés polymérisables.

2. Copolymère selon la revendication 1 caractérisé en ce qu'il contient de 50 à 95% en poids de motifs répétés d'un composé hétérocyclique à cycle pentagonal qui contient un seul radical éthylénique polymérisable et dont le cycle contient au moins un atome d'azote protonable, ou de plusieurs composés de ce genre, de 5 à 50% en poids de motifs d'un ou plusieurs réticulants, de 0 à 25% en poids de motifs d'un composé orgamique du bore ou du silicium polymérisable, ou de plusieurs composés de ce genre, et, pour 100% en poids de l'ensemble des motifs qui viennent d'être mentionnés, de 10 à 250% en poids de motifs d'un ou de plusieurs N-vinyl-amides de formule générale I, et de 0 à 25% en poids de motifs d'un ou de plusieurs autres composés polymérisables.

3. Copolymère selon l'une des revendications 1 et 2, caractérisé en ce qu'il contient de 0,1% à 10% en poids de motifs d'un composé organique du bore ou du silicium polymérisable.

4. Copolymère selon l'une quelconque des revendications 1 à 3, caractérisé en ce qu'il ne contient pas de motif d'autres composés polymérisables.

5. Copolymère selon l'une quelconque des revendications 1 à 4, caractérisé en ce qu'il contient, comme réticulants, des motifs de N,N'-méthylène-bis-acrylamide et/ou de N,N'-méthylène-bis-méthacrylamide et/ou

de bis-acrylate de l'éthylène-glycol et/ou de bis-méthacrylate de l'éthylène-glycol et/ou de bis-acrylate du diéthylène-glycol et/ou du bis-méthacrylate du diéthylène-glycol et/ou de bis-acrylate d'un polyéthylène-glycol 200 à 600 et/ou de bis-méthacrylate d'un polyéthylène-glycol 200 à 600 et/ou d'isocyanurate de tris-(acryloyloxy-2 éthyle) et/ou d'isocyanurate de tris-(méthacryloyloxy-2 éthyle).

6. Procédé de préparation d'un copolymère réticulé poreux en perles selon l'une quelconque des revendications 1 à 5, par copolymérisation, procédé caractérisé en ce qu'on copolymérise par la méthode de la polymérisation en suspension inversée de 50 à 99,9% en poids d'un ou de plusieurs composés hétérocycliques à cycle pentagonal qui contiennent un seul radical éthylénique polymérisable et dont le cycle contient au moins un atome d'azote protonable, de 0,1 à 50% en poids d'un ou de plusieurs réticulants, de 0 à 25% en poids d'un ou de plusieurs composés organiques du bore et/ou du silicium polymérisables, et, pour 100% de l'ensemble des composés qui viennent d'être cités, de 5 à 350% en poids d'un N-vinyl-amide répondant à la formule générale I:

$CH_2=CH-N(R^1)-C(R^2)=O$ (I)

dans laquelle $R^1$ représente l'hydrogène ou un radical méthyle ou éthyle et $R^2$ représente l'hydrogène ou un radical alkyle en $C_1$-$C_3$, ou de plusieurs N-vinyl-amides de ce genre, et de 0 à 40 % en poids d'un ou de plusieurs autres composés polymérisables.

7. Procédé selon la revendication 6 caractérisé en ce qu'on copolymérise de 50 à 95 % en poids d'un composé hétérocyclique à cycle pentagonal qui contient un seul radical éthylénique polymérisable et dont le cycle contient au moins un atome d'azote protonable, ou de plusieurs composés de ce genre, de 5 à 50 % en poids d'un ou de plusieurs réticulants, de 0 à 25 % en poids d'un ou de plusieurs composés organiques du bore et/ou du silicium polymérisables, et, pour 100 % de la somme des composés qui viennent d'être cités, de 10 à 250 % en poids d'un ou de plusieurs N-vinylamides de formule générale I et de 0 à 25 % en poids de motifs d'un ou de plussieurs autres composés polymérisables.

8. Procédé selon l'une des revendications 6 et 7 caractérisé en ce que la copolymérisation est effectuée sans composé du groupe des autres composés polymérisables.

9. Procédé selon l'une quelconque de revendications 6 à 8, caractérisé en ce qu'on utilise de 0,1 à 10 % en poids d'un composé organique du bore et/ou du silicium polymérisable.

10. Procédé pour séparer des substances acides de solutions aqueuses, par sorption sur une résine échangeuse, puis élution au moyen d'un solvant organique, procédé caractérisé en ce qu'on utilise, comme résine échangeuse, un copolymère selon l'une quelconque des revendications 1 à 5.

11. Application d'un copolymère selon une ou plusieurs des revendicatiaons 1 à 5 pour lasorption d'ions de métaux lourds à partir de solutions aqueuses.

**Revendications**

pour l'Etat contractant: AT

1. Procédé de préparation d'un copolymère réticulé poreux en perles, par copolymérisation, procédé caractérisé en ce qu'on copolymérise par la méthode de la polymérisation en suspension inversée de 50 à 99,9% en poids d'un ou plusieurs composés hétérocycliques à cycle pentagonal qui contiennent un seul radical éthylénique polymérisable et dont le cycle contient au moins un atome d'azote protomable, de 0,1 à 50% en poids d'un ou de plusieurs réticulants, de 0 à 25% en poids d'un ou de plusieurs composés organiques du bore et/ou du silicium polymérisables, et, pour 100% de l'ensemble des composés qui viennent d'être cités, de 5 à 350% en poids d'un N-vinyl-amide répondant à la formule générale:

$CH_2=CH-N(R^1)-C(R^2)=O$ (I)

dans laquelle $R^1$ représente l'hydrogène ou un radical méthyle ou éthyle et $R^2$ l'hydrogène ou un radical alkyle en $C_1$-$C_3$, ou plusieurs N-vinyl-amides de ce genre, et de 0 à 40% en poids d'un ou de plusieurs autres composés polymérisables.

2. Procédé selon la revendication 1 caractérisé en ce qu'on copolymérise de 50 à 95% en poids d'un composé hétérocyclique à cycle pentagonal qui contient un seul radical éthylénique polymérisable et dont le cycle contient au moins un atome d'azote protonable, ou de plusieurs composés de ce genre, de 5 à 50% en poids d'un ou plusieurs réticulants, de 0 à 25% en poids d'un ou plusieurs composés organiques du bore et/ou du silicium polymérisables, et, pour 100% de l'ensemble des composés qui viennent d'être cités, de 10 à 250% en poids d'un ou de plusieurs N-vinyl-amides de formule générale I et de 0 à 25% en poids d'un ou de plusieurs autres composés polymérisables.

3. Procédé selon l'une des revendications 1 et 2, caractérisé en ce que la copolymérisation est effectuée sans composé du groupe des autres composés polymérisables.

4. Procédé selon l'une quelconque des revendications 1 à 3, caractérisé em ce qu'on utilise de 0,1 à 10% en poids d'un composé organique du bore et/ou du silicium polymérisable.

5. Procédé selon l'une quelconque des revendications 1 à 4, caractérisé en ce qu'on utilise, comme réticulants, le N,N'-méthylène-bis-acrylamide et/ou le N,N'-méthylène-bis-méthacrylamide et/ou le bis-acrylatede l'éthylène-glycol et/ou le bis-méthacrylate de l'éthylène-glycol et/ou le bis-acrylate du diéthylène-glycol et/ou le bis-méthacrylate du diéthylène-glycol et/ou le bis-acrylate d'un polyéthylène-glycol 200 à 600 et/ou le bis-méthacrylate d'un polyéthylène-glycol 200 à 600 et/ou l'isocyanurate de tris-(acryloyloxy-2 éthyle)

et/ou l'isocyanurate de tris-(méthacryloyloxy-2 éthyle).

6. Procédé pour séparer des substances acides de solutions aqueuses, par sorption sur une résine échangeuse, puis élution au moyen d'un solvant organique, procédé caractérisé en ce qu'on utilise, comme résine échangeuse, un copolymère susceptible d'être préparé selon l'une quelconque des revendications 1 à 5.

7. Application d'un copolymère susceptible d'être préparé selon l'une quelconque des revendications 1 à 5 pour la sorption d'ions de métaux lourds à partir de solutions aqueuses.